# EUROPEAN PATENT APPLICATION

(11) **EP 4 503 853 A1**
(43) Date of publication of application: **05.02.2025**
(21) Application number: 24188532.6
(22) Date of filing: 15.07.2024
(51) Int. Cl.: H05B 3/48, A47J 31/54, F24H 1/10

(54) **ELECTRIC HEATER**

(30) Priority: 31.07.2023 IT 202300003309 U
(71) Applicant: ROTFIL S.r.l., 10044 Pianezza (IT)
(72) Inventor: RAVAGLIA, Mario Roberto, 10040 Robassomero (Torino) (IT)
(74) Representative: Rapisardi, Mariacristina

(57) **Abstract**

The electric heater (1) comprises an outer tube (6), an electrically insulated electric resistor (2) housed inside the outer tube (6), and a gap (4) positioned between the electric resistor (2) and the outer tube (6), featuring an inlet path (13) for a fluid and an outlet path (14) for the fluid, with at least one sheath (15a, 15b) made of metal wire fabric housed in the gap (4).

## Description

The present invention relates to an electric heater.

Its preferred, but not exclusive, application field is related to the heating of fluids, typically water. The electric heater according to the invention can be used in domestic or industrial appliances, particularly but not exclusively in coffee machines.

Electric instant heaters for coffee machines have been available on the market for some time.

In some versions, these electric instant heaters include a heating wire embedded in a metal block, generally aluminum, with a channel for the water to be heated/vaporized.

To ensure efficient heat transmission, the mass of the metal block must be appropriately sized. An excessive or insufficient mass of the metal block can indeed be detrimental to efficient heat transmission.

These electric heaters have the drawback of requiring a substantial amount of raw material, specifically aluminum, for their construction, which can be particularly expensive and not always easily available on the market.

In some cases, especially if the electric heater is expressly used as an instant boiler in coffee machines, the performance in terms of energy exchange efficiency can be compromised over time by the progressive formation of scale along the water path.

Another limitation of these known electric heaters is their propensity to accumulate scale, which progressively impairs their proper functioning. Therefore, the technical task proposed by the present invention is to create an electric heater that eliminates the technical drawbacks complained about in the known art.

Within the scope of this technical task, an objective of the invention is to create an electric heater capable of improving and maintaining heat exchange efficiency over time with the same installed power density.

Another objective of the invention is to create an electric heater with high heat exchange efficiency that has a simplified structure and can be constructed in a simple and economical manner. Another objective of the invention is to create an electric heater that effectively combats the formation of scale.

The technical task, as well as these and other objectives, according to the present invention, are achieved by creating an electric heater comprising an outer tube, an electrically insulated electric resistor housed inside said outer tube, and a gap positioned between said electric resistor and said outer tube and featuring an inlet path for a fluid and an outlet path for the fluid, characterized by the fact that at least one sheath made of metal wire fabric is housed in said gap. Advantageously, the sheath made of metal wire fabric significantly improves and maintains the heat exchange efficiency over time as it provides a greatly increased heat exchange surface compared to traditional solutions, without promoting the accumulation of scale.

In addition to maintaining performance over time, the electric heater thus requires less periodic maintenance and has a longer life cycle.

Furthermore, unexpectedly, it has been found that the sheath made of metal wire fabric reduces the formation of scale and promotes its disintegration and removal.

Other features of the present invention are also defined in the subsequent claims.

Further characteristics and advantages of the invention will become more evident from the description of the electric heater according to the invention, particularly suitable for use as an instant boiler for a coffee machine, illustrated by way of example and not limitation in the attached drawings, in which:
Figure 1 shows an axonometric view of the electric heater from which a section of the outer tube and a section of the outer sheath have been removed for viewing convenience;
Figure 2 shows a cross-sectional view of the electric heater taken along line 2 - 2 of Figure 1;
Figure 3 shows a spiral configuration of an electric heater according to the invention;
Figure 4 shows a temperature probe applicable to the electric heater;
Figure 5 shows safety thermal fuses applicable to the power supply of the electric resistor;
Figure 6 shows an electric heater similar to that in Figure 3 with the addition of a temperature probe and thermal fuses;
Figure 7 shows a further variant of the heater according to the present invention;
Figure 8 shows a cross-section along line 7-7 of the electric heater in Figure 7.

With reference to the cited figures, an electric heater is shown, generally indicated by reference number 1, comprising an electrically insulated electric resistor 2 housed inside an outer tube 6. Particularly, but not necessarily, the electric heater 1 is of the armored type.

In the illustrated application, the electric resistor 2 includes a heating metal wire 2c, coated with an electrically insulating material 2a, typically but not necessarily compressed magnesium oxide, embedded in a sheath 2b, typically but not necessarily made of steel.

The heating wire 2c is particularly, but not necessarily, made of Nickel/Chrome 80/20.

The outer tube 6 is also metallic, particularly but not necessarily made of stainless steel.

The electric heater 1 includes a gap 4 positioned between the electric resistor 2 and the outer tube 6.

The gap 4 has an inlet path 13 for a fluid, typically water, and an outlet path 14 for the fluid. Advantageously, at least one sheath 15a, 15b made of metal wire fabric is housed in the gap 4, wrapping around the electric resistor 2.

The sheath 15a, 15b is permeable to the fluid, meaning that the fluid can pass through the spaces between the metal wires of the sheath 15a, 15b.

The sheath 15a, 15b is preferably formed from woven metal wire ribbons but can alternatively be made from a mesh metal fabric.

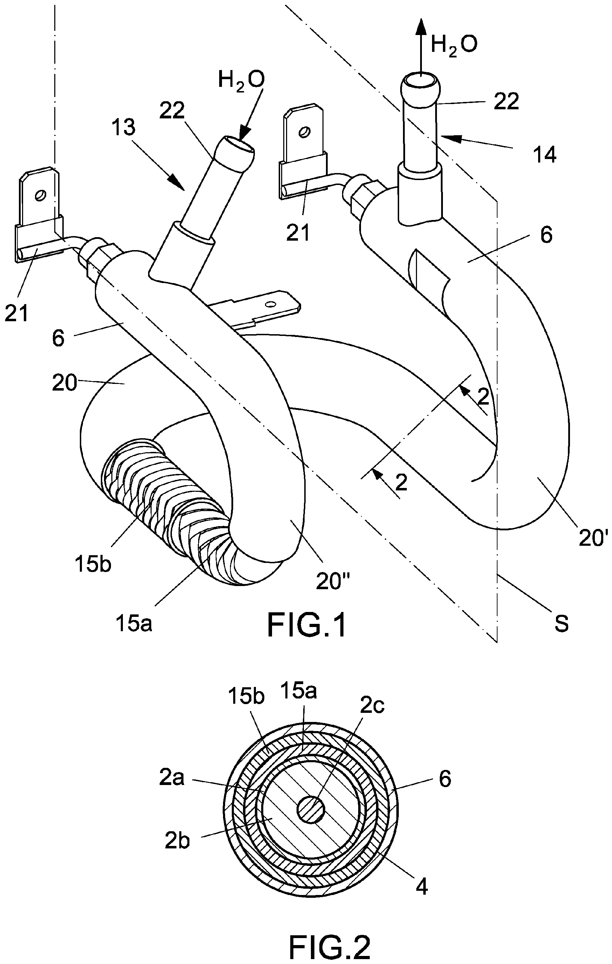

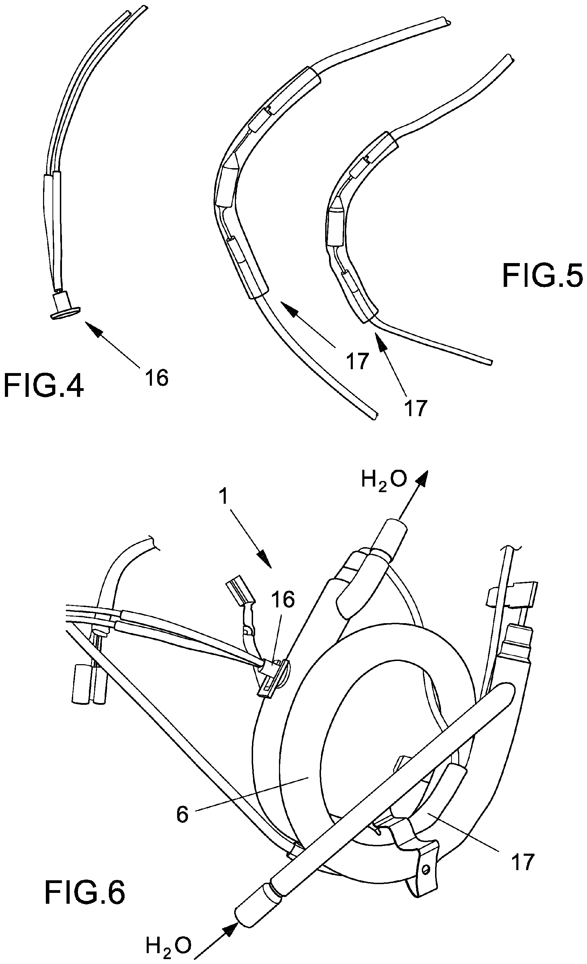

The solution illustrated in Figures 1 - 6 particularly shows an inner sheath 15a and an outer sheath 15b, both made of woven metal wire ribbons, where the outer sheath 15b covers the inner sheath 15a.

If multiple sheaths are present, where one covers the other, the metal wire ribbons and the weaving pattern between the metal wire ribbons can differ among the sheaths.

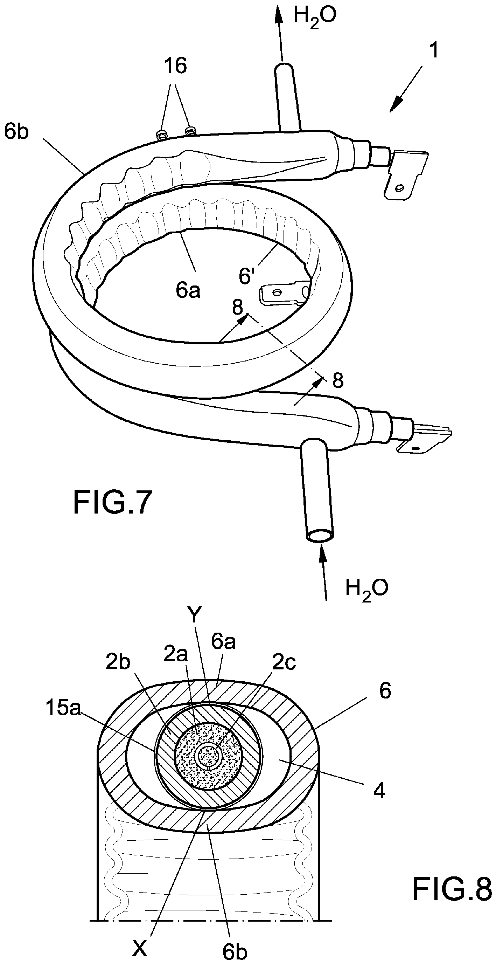

The solution illustrated in Figures 7 - 8 particularly shows a single sheath 15a.

The metal wires of the sheath 15a, 15b are preferably made of stainless steel. The metal wires of the sheath 15a, 15b preferably have a diameter between 1×10⁻⁶ m and 50×10⁻⁶ m.

The sheath 15a, 15b is flexible to adapt to the shape of the inner electric resistor 2, which, as shown, can be curvilinear.

Obviously, in such a case, the outer tube 6 has a curvilinear shape congruent with that of the inner electric resistor 2.

As evident from the attached figures, the electric heater 1 develops longitudinally along an axis that may have one or more curves.

In the case illustrated in Figure 1, the electric heater 1 has a central symmetry plane S passing through the midpoint of a central curve 20 at 180° orthogonal to the symmetry plane S, which central curve 20 at 180° connects a right branch and a left branch of the electric heater 1 positioned symmetrically with respect to the symmetry plane S and in turn having respective curves 20', 20" at 180° in a plane parallel to the central symmetry plane S. This configuration of the electric heater 1 is particularly convenient because it defines a compact product where the electrical connectors 21 and the hydraulic fittings 22 can all be arranged on the same side.

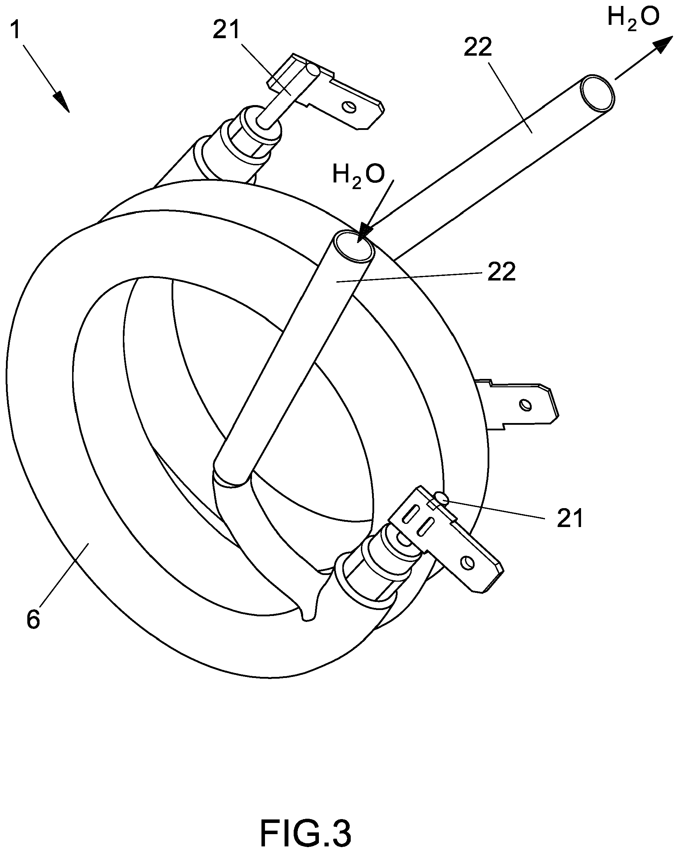

Figure 3 shows instead an electric heater 1 wound in a spiral, a particularly simple configuration to obtain.

Figures 7 and 8 show another electric heater 1 wound in a spiral, but with an outer tube 6 flattened, defining two opposing flattened longitudinal faces 6a, 6b in contact with two diametrically opposite longitudinal zones X and Y of the sheath 15a.

The flattening and bending process imparts at least one of the two opposing flattened longitudinal faces 6a, 6b of the outer tube 6, specifically only the face 6a defining the inner side of the spiral, with a corrugation 6' that breaks the continuity of the contact with the corresponding zone X of the sheath 15a and thus allows fluid communication between the volumes of the gap 4 separated by the contact zones X and Y.

The face 6b defining the outer side of the spiral, being specifically without corrugation, provides continuous contact with the corresponding zone Y of the sheath 15a.

This configuration of the electric heater 1 has been found particularly effective in tackling the formation and accumulation of scale.

The invention can also be used in other types of electric heaters, such as cartridge electric heaters. In the case of a cartridge electric heater, the gap 4 surrounds a resistive heating wire wound in a spiral around a central cylindrical support core. This resistive heating wire is embedded in a tubular matrix covered by a tubular sheath, whose outer lateral surface delimits the gap 4 with the inner lateral surface of the outer tube 6. The sheath 15a, 15b in this case wraps around the tubular sheath of the tubular matrix that embeds the resistive heating wire.

Preferably, in the case of a cartridge electric heater, the central core is made of magnesium oxide, the resistive heating wire is made of nickel-chrome, the matrix is made of magnesium oxide, and the sheath is made of a metal with excellent thermal conductivity, high resistance to oxidation at high temperatures, high resistance to chemical corrosion, and structural stability even after numerous heating and cooling cycles.

In a variant falling within the protection scope of the invention, the electric heater may feature the electric resistor 2 in the form of a longitudinal thermistor made from a ceramic plate or a stack of ceramic plates with a positive temperature coefficient (PTC). In this case, the gap 4 surrounds the thermistor, which is embedded in a tubular matrix covered by a tubular sheath, whose outer lateral surface delimits the gap 4 with the inner lateral surface of the outer tube 6. The sheath 15a, 15b in this case wraps around the tubular sheath of the tubular matrix that embeds the thermistor. As previously mentioned regarding the cartridge electric heater, the matrix can be made of magnesium oxide, and the sheath can be made of a metal with excellent thermal conductivity, high resistance to oxidation at high temperatures, high resistance to chemical corrosion, and structural stability even after numerous heating and cooling cycles.

Preferably, the electric heater also includes a temperature sensor 16 (usually an NTC thermistor) positioned at the fluid outlet but still in a zone where the electric resistor heats.

With this temperature sensor 16, precise electronic control of the fluid temperature is possible. Advantageously, in the case illustrated in Figures 7 and 8, the temperature sensor 16 is positioned at a contact point of one of the two opposing flattened longitudinal faces 6a, 6b of the outer tube 6, specifically face 6b, with the sheath 15a.

This allows for faster adjustment of the water temperature.

Additionally, it preferably includes electric thermal fuses 17 connected in series with the power supply of the electric resistor 2 to provide safety in case a fault causes excessive overheating of the heater 1.

In practice, the materials used and the dimensions can be any depending on the requirements and the state of the art.

## Claims

1. Electric heater (1), comprising an outer tube (6), an electrically insulated electric resistor (2) housed inside said outer tube (6), and a gap (4) positioned between said electric resistor (2) and said outer tube (6) and featuring an inlet path (13) for a fluid and an outlet path (14) for the fluid, **characterized by** the fact that at least one sheath (15a, 15b) made of metal wire fabric is housed in said gap (4).

2. Electric heater (1) according to claim 1, **characterized by** the fact that said at least one sheath (15a, 15b) is permeable to the fluid.

3. Electric heater (1) according to any preceding claim, **characterized by** the fact that said at least one sheath (15a, 15b) is made of woven metal wire ribbons.

4. Electric heater (1) according to any preceding claim, **characterized by** the fact that said metal wires are made of stainless steel.

5. Electric heater (1) according to any preceding claim, **characterized by** the fact that said metal wires have a diameter between 1×10⁻⁶ m and 50×10⁻⁶ m.

6. Electric heater (1) according to any preceding claim, **characterized by** the fact that said at least one sheath (15a, 15b) is flexible.

7. Electric heater (1) according to any preceding claim, **characterized by** the fact that said outer tube (6) is metallic.

8. Armored electric heater (1) according to any preceding claim.

9. Electric heater (1) according to the preceding claim, **characterized by** the fact that said electric resistor (2) is curvilinear and said outer tube is curvilinear in shape congruent with that of said electric resistor (2).

10. Spiral-shaped electric heater (1) according to the preceding claim.

11. Electric heater (1) according to any preceding claim, **characterized by** the fact that it includes a temperature sensor positioned at the fluid outlet.

12. Electric heater (1) according to any preceding claim, **characterized by** the fact that it includes safety thermal fuses.

13. Electric heater (1) according to any preceding claim, **characterized by** the fact that it is configured for use as an instant boiler in a coffee machine.

14. Electric heater (1) according to any preceding claim, **characterized by** the fact that said outer tube (6) is wound in a spiral and flattened, defining two opposing flattened longitudinal faces (6a, 6b) in contact with corresponding diametrically opposite longitudinal contact zones (X and Y) of the sheath (15a), and by the fact that at least one of the two opposing flattened longitudinal faces (6a, 6b) of the outer tube (6) features a corrugation (6') that breaks the continuity of contact with the corresponding contact zone (X) of the sheath (15a) and thus allows fluid communication between the volumes of the gap (4) separated by the contact zones (X and Y).

15. Electric heater (1) according to the preceding claim, **characterized by** the fact that it includes a temperature sensor (16) positioned at a contact point of one of the two opposing flattened longitudinal faces (6a, 6b) of the outer tube (6) with the sheath (15a).
